# EUROPÄISCHE PATENTANMELDUNG

(11) **EP 3 915 648 A1**
(43) Veröffentlichungstag der Anmeldung: **01.12.2021**
(21) Anmeldenummer: 20177105.2
(22) Anmeldetag: 28.05.2020
(51) Int. Cl.: A62B 23/02, B01D 39/16

(54) **ATEMSCHUTZMASKE**

(71) Anmelder: Eurofilters Holding N.V., 3900 Overpelt (BE)
(72) Erfinder: Sauer, Ralf, 3900 Overpelt (BE); Schultink, Jan, 3900 Overpelt (BE)
(74) Vertreter: Grünecker Patent- und Rechtsanwälte PartG mbB

(57) **Zusammenfassung**

Die Erfindung stellt eine Atemschutzmaske (1) umfassend ein Filtermaterialstück aus einem luftdurchlässigen Material (2) und wenigstens ein Befestigungsband (3) bereit, wobei das luftdurchlässige Material (2) mindestens eine Lage (6,7,6) eines biologisch abbaubaren Vliesstoffes umfasst, wobei das wenigstens eine Befestigungsband (3) zur Befestigung der Atemschutzmaske (1) am Kopf ausgebildet ist.

## Beschreibung

Die Erfindung betrifft eine Atemschutzmaske.

Atemschutzmasken bedecken regelmäßig Mund und Nase des Trägers mit einem Filtermaterial und dienen zu dessen Schutz vor in der Luft enthaltenen Schadstoffen und zum Schutz der Umgebung vor ausgeatmeten Bakterien und Viren. Insofern umfasst der Begriff unter anderem insbesondere einen Mund-Nasen-Schutz, medizinische Gesichtsmasken und filtrierende Halbmasken.

Das verwendete Filtermaterial besteht heutzutage im Allgemeinen aus einem Vliesstoff, der aus Kunststoff hergestellt wird. Viele Atemschutzmasken sind für den Einmalgebrauch gedacht und werden danach entsorgt.

Angesichts des immer weiter steigenden Bedarfs an Atemschutzmasken führt dies zu einer großen Menge an Kunststoffabfällen.

Angesichts dessen besteht die der Erfindung zugrundeliegende Aufgabe darin, eine in ökologischer Hinsicht verbesserte Atemschutzmaske mit guten Filter- bzw. Schutzeigenschaften bereit zu stellen.

Diese Aufgabe wird durch eine Atemschutzmaske gemäß Anspruch 1 gelöst.

Die Erfindung stellt eine Atemschutzmaske umfassend ein Filtermaterialstück aus einem luftdurchlässigen Material und wenigstens ein Befestigungsband,
wobei das luftdurchlässige Material mindestens eine Lage eines biologisch abbaubaren Vliesstoffes umfasst,
wobei das wenigstens eine Befestigungsband zur Befestigung der Atemschutzmaske am Kopf ausgebildet ist.

Dadurch, dass das luftdurchlässige Material wenigstens eine biologisch abbaubare Vliesstofflage, also wenigstens eine Lage aus einem biologisch abbaubaren Vliesstoff, umfasst, kann die Atemschutzmaske umweltfreundlicher entsorgt werden.

Im Sinne der vorliegenden Erfindung bezeichnet ein "Vliesstoff" ein Wirrgelege, das einen Verfestigungsschritt (Vliesbindeschritt) durchlaufen hat., so dass es eine ausreichende Festigkeit aufweist, um insbesondere maschinell (also in industriellem Maßstab) zu Rollen auf- bzw. abgewickelt zu werden. Die für ein derartiges Aufwickeln minimal erforderliche Bahnspannung beträgt 0,044 N/mm. Die Bahnspannung sollte nicht höher als 10 % bis 25 % der Mindesthöchstzugkraft (gemäß DIN EN 29073-3:1992-08) des aufzuwickelnden Materials betragen. Daraus resultiert eine Mindesthöchstzugkraft für ein aufzuwickelndes Material von 8,8 N pro 5 cm Streifenbreite.

Ein "Faservlies" (oder kurz nur "Vlies" genannt) entspricht einem Wirrgelege, das jedoch keinen Verfestigungsschritt durchlaufen hat, so dass im Gegensatz zu einem Vliesstoff ein derartiges Wirrgelege keine ausreichende Festigkeit aufweist, um zum Beispiel maschinell zu Rollen auf- bzw. abgewickelt zu werden.

Der Begriff Vliesstoff ("Nonwoven") wird in anderen Worten gemäß der Definition nach ISO Standard ISO 9092:1988 bzw. CEN Standard EN 29092 verwendet. Details zur Verwendung der darin beschriebenen Definitionen und/oder Verfahren lassen sich auch dem Lehrbuch "Vliesstoffe", H. Fuchs, W. Albrecht, WILEY-VCH, 2012, entnehmen.

Unter "Fasern" werden sowohl Fasern endlicher Länge (bspw. Stapelfasern) als auch Fasern theoretisch unendlicher Länge, d.h. Endlosfasern oder Filamente, verstanden.

Das luftdurchlässige Material kann insbesondere eine Vliesstofflage, also eine Lage aus Vliesstoff, umfassen, welche aus einem biologisch abbaubaren Material, insbesondere aus einem biologisch abbaubaren Kunststoffmaterial, besteht.

Biologisch abbaubare Kunststoffe können durch biologischen Abbau aus der Umwelt entfernt und dem mineralischen Stoffkreislauf zugeführt werden. Insbesondere werden unter "biologisch abbaubare Kunststoffe" Kunststoffe verstanden, welche die Kriterien der Europäischen Normen EN 13432 und/oder EN 14995 erfüllen.

Das biologisch abbaubare Kunststoffmaterial kann insbesondere ein Polylactid (PLA), ein Polyhydroxyalkanoat (PHA), ein Polycaprolacton (PCL), einen Celluloseester, insbesondere Celluloseacetat, Polybutylenadipat-terephthalat (PBAT) oder Polybutylensuccinat (PBS) umfassen.

Die Verarbeitung biologisch abbaubarer Kunststoffe zu Vliesstoffen wird beispielsweise in der US 6,207,601 bzw. der EP 0 885 321 beschrieben.

Der biologisch abbaubare Vliesstoff kann ein trocken- oder nassgelegter Vliesstoff oder ein Extrusionsvliesstoff, insbesondere ein Meltblown-, Spunbond- (Spinnvlies) oder Spunblown-Vliesstoff sein.

Der biologisch abbaubare Vliesstoff kann Stapelfasern oder Endlosfasern umfassen. Fertigungstechnisch können auch mehrere Schichten an Stapelfasern oder Endlosfasern vorgesehen werden, die zu genau einer Lage Vliesstoff verfestigt werden.

Das luftdurchlässige Material kann insbesondere genau eine filteraktive Lage umfassen, wobei die genau eine filteraktive Lage der biologisch abbaubaren Vliesstofflage entspricht. Als filteraktive Lage wird hier eine für die Filterung des zu filternden Luftstromes relevante Lage bezeichnet. Das luftdurchlässige Material kann außerdem ein Netz umfassen. Das Netz kann zur ästhetischen Gestaltung, beispielsweise zur farblichen Gestaltung, der Atemschutzmaske dienen. Das Netz kann auch zur Verbesserung der Stabilität des Filtermaterialstücks der Atemschutzmaske dienen. Das Netz kann beispielsweise ein extrudiertes Netz oder ein gewebtes Netz sein. Das Netz kann eine Maschenweite von wenigstens 1 mm, insbesondere wenigstens 3 mm, aufweisen. Das Netz kann aus einem biologisch abbaubaren Material bestehen.

Das Filtermaterialstück bzw. das luftdurchlässige Material kann aus einer biologisch abbaubaren Vliesstofflage bestehen. Mit anderen Worten kann das Filtermaterialstück einlagig sein, wobei die einzige Lage der biologisch abbaubaren Vliesstofflage entspricht. In diesem Fall kann die biologisch abbaubare Vliesstofflage insbesondere in Form einer biologisch abbaubaren Meltblownlage oder Spun-blown-Lage ausgebildet sein. Insbesondere ist in diesem Fall keine Stützlage oder Verstärkungslage für die biologisch abbaubare Vliesstofflage vorgesehen. Mit anderen Worten kann die biologisch abbaubare Vliesstofflage derart ausgebildet sein, dass sie den üblichen Beanspruchungen bei Herstellung und Gebrauch standhält. In diesem Fall ist das gesamte Filtermaterialstück auf einfache Weise biologisch abbaubar gefertigt.

Der biologisch abbaubare Vliesstoff kann ein kalandrierter Vliesstoff sein, insbesondere ein thermisch oder mittels Ultraschall kalandrierter Vliesstoff. Zum thermischen Kalandrieren kann das zunächst unverfestigte Vlies zwischen zwei Walzen hindurchgeführt werden, von welchen wenigstens eine auf die Schmelztemperatur der das Vlies bildenden Fasern erhitzt ist. Wenigstens eine der Kalandrierwalzen kann Erhebungen aufweisen. Dadurch können Schmelzzonenbereiche oder Schweißpunkte gebildet werden.

Ultraschallkalandrierung oder Ultraschallverfestigung beruht auf der Umwandlung elektrischer Energie in mechanische Vibrationsenergie. Dabei werden Verfestigungshörner in Vibration versetzt, wobei an den Vibrationsstellen die Fasern an ihren Kreuzungsstellen im Vlies erweicht und miteinander verschweißt werden. Dadurch können Schweißpunkte gebildet werden.

Das luftdurchlässige Material kann mehrlagig aufgebaut sein, wobei mindestens eine, mehrere oder sämtliche der Lagen einen biologisch abbaubaren Vliesstoff umfassen oder hieraus gebildet sind.

Das luftdurchlässige Material kann auch eine oder mehrere zusätzliche Lagen umfassen, welche keinen Vliesstoff umfassen, beispielsweise ein Netz. In diesem Fall können auch die zusätzlichen Lagen aus einem biologisch abbaubaren Material bestehen oder ein biologisch abbaubares Material umfassen.

Die biologisch abbaubare Vliesstofflage kann ein Flächengewicht von 20 g/m² bis 200 g/m², insbesondere 40 g/m² bis 150 g/m², insbesondere 80 g/m², aufweisen.

Die biologisch abbaubare Vliesstofflage kann eine Höchstzugkraft in Maschinenrichtung von mehr als 20 N, insbesondere von mehr als 40 N, und/oder in Querrichtung von mehr als 20 N, insbesondere mehr als 40 N, aufweisen.

Die biologisch abbaubare Vliesstofflage kann eine Luftdurchlässigkeit von 100 l/(m²s) bis 1000 l/(m²s), insbesondere von 300 l/(m²s) bis 600 l/(m²s), insbesondere von 400 l/(m²s) bis 500 l/(m²s), aufweisen.

Die biologisch abbaubare Vliesstofflage kann elektrostatisch aufgeladen sein. Bei einem mehrlagigen Aufbau können eine, mehrere oder alle Vliesstofflagen elektrostatisch aufgeladen sein. Insbesondere kann eine Meltblownlage elektrostatisch aufgeladen sein.

Es können die Fasern vor dem Verfestigen und/oder der Vliesstoff, also nach dem Verfestigen, elektrostatisch aufgeladen werden. Für ein elektrostatisches Aufladen hat sich insbesondere PLA als vorteilhaft erwiesen.

Die biologisch abbaubare Vliesstofflage kann durch ein Koronaverfahren elektrostatisch aufgeladen werden. Alternativ oder zusätzlich kann die biologisch abbaubare Vliesstofflage durch ein Verfahren gemäß der Lehre der US 5,401,446 elektrostatisch aufgeladen werden. Eine weitere Variante besteht in einem Zusatz von Additiven und einer Wasserstrahlbehandlung (Hydrocharging), wie sie beispielsweise in der WO 97/07272 beschrieben ist.

Der Filterteil bzw. das Filtermaterialstück der (fertigen, aber unbenutzten) Atemschutzmaske kann (in Draufsicht) eine polygonale, insbesondere im wesentlichen rechteckige Form haben. Dies gilt insbesondere auch für den Fall eines Filtermaterialstücks mit Falten. Der Filterteil bzw. das Filtermaterialstück kann eine dreidimensional geformte Form, beispielsweise aufgrund räumlicher Umformung, aufweisen. Insbesondere letzteres erlaubt eine genauere Anpassung an die Gesichtsform, was zu einem geringeren Leckvolumenstrom führt.

Gemäß einer Ausführungsform kann das luftdurchlässige Material mindestens eine Stützlage und mindestens eine Feinfilterlage umfassen, wobei die mindestens eine Stützlage und/oder die mindestens eine Feinfilterlage eine biologisch abbaubare Vliesstofflage sind.

Eine oder beide Trägerlagen können ein Vliesstoff, insbesondere ein Spunbond oder ein Spun-blown sein. Alternativ können eine oder beide Trägerlagen ein Netz (Netting) sein. Das Netz kann dabei Eigenschaften aufweisen, wie sie in der EP 2 011 556 A1 beschrieben sind, die hiermit durch Bezugnahme aufgenommen wird.

Eine Stützlage (manchmal auch "Trägerlage" oder "Verstärkungslage" genannt) im Sinne der vorliegenden Erfindung ist dabei eine Lage, die dem mehrlagigen Verbund des Filtermaterialstücks die notwendige mechanische Festigkeit verleiht. Hierunter wird ein offener, poröser Vliesstoff bzw. ein Nonwoven mit leichtem Flächengewicht bezeichnet. Eine Stützlage dient unter anderem dazu, andere Lagen oder Schichten zu stützen. Die Stützlage, wie auch jede andere Lage des Filtermaterials kann gegebenenfalls auch elektrostatisch aufgeladen sein, unter der Voraussetzung, dass das Material geeignete dielektrische Eigenschaften aufweist.

Eine Feinfilterlage dient der Erhöhung der Filtrationsleistung des mehrlagigen Filtermaterialstücks durch Einfangen von Partikeln, die beispielsweise durch die Stützlage hindurch gelangen. Zur weiteren Erhöhung der Abscheideleistung kann die Feinfilterlage bevorzugt elektrostatisch (z.B. durch Coronaentladung oder Hydrocharging) aufgeladen werden.

Bei den Atemschutzmasken kann jede Stützlage ein Spinnvlies (Spunbond) oder ein Spun-Blown sein, vorzugsweise mit einer Grammatur von 5 bis 80 g/m², weiter bevorzugt von 10 bis 50 g/m², weiter bevorzugt von 15 bis 30 g/m² und/oder vorzugsweise mit einem Titer der das Spinnvlies bildenden Fasern im Bereich von 0,5 dtex bis 15 dtex.

Das luftdurchlässige Material kann dabei vorzugsweise ein bis drei Stützlagen umfassen.

Im Falle des Vorhandenseins zweier Stützlagen beträgt die Gesamtgrammatur der Summe aller Stützlagen vorzugsweise 10 bis 200 g/m², weiter bevorzugt 15 bis 150 g/m², weiter bevorzugt 20 bis 100 g/m², weiter bevorzugt 30 bis 90 g/m², insbesondere 40 bis 70 g/m².

Insbesondere ist es bevorzugt, dass sämtliche Stützlagen ein biologisch abbaubarer Vliesstoff sind. Eine Stützlage in Form eines Spunbonds oder eines Spun-blowns kann insbesondere aus PBAT (bspw. Ecoflex von BASF) einem anderen biologisch abbaubaren Polyester wie Duvaltex bestehen.

Gemäß einer weiteren vorteilhaften Ausgestaltungsform ist jede Feinfilterlage ein Extrusionsvliesstoff, insbesondere ein Meltblown-Vliesstoff. Der Extrusionsvliesstoff hat vorzugsweise eine Grammatur von 10 bis 80 g/m², weiter bevorzugt 15 bis 50 g/m², insbesondere 20 bis 40 g/m². Ein Meltblown-Vliesstoff kann insbesondere aus PLA bestehen.

Hierbei ist es möglich, dass das luftdurchlässige Material 1 bis 5 Feinfilterlagen umfasst.

Im Falle des Vorhandenseins mindestens zweier Feinfilterlagen beträgt die Gesamtgrammatur der Summe aller Feinfilterlagen vorzugsweise 10 bis 80 g/m², weiter bevorzugt 15 bis 50 g/m², insbesondere 20 bis 40 g/m².

Eine Ausführungsform des Aufbaus des luftdurchlässigen Materials für die erfindungsgemäße Atemschutzmaske sieht den nachfolgend beschriebenen mehrlagigen Aufbau mit einer Lagenfolge vor:
eine Stützlage, eine oder zwei Feinfilterlagen sowie eine weitere Stützlage.

Insbesondere wenn die Stützlage als Spunbond-Vliesstoff und die Feinfilterlage als Meltblown-Vliesstoff aufgebaut sind, liegt dann ein SMS- bzw. SMMS-Aufbau vor. Statt des Spunbonds können in diesem Aufbau auch Spun-Blown-Lagen eingesetzt werden.

Bei den beschriebenen Atemschutzmasken kann das wenigstens eine Befestigungsband einen biologisch abbaubaren Kunststoff umfassen oder aus einem oder mehreren biologisch abbaubaren Kunststoffen gebildet sein. Beispielsweise kann es sich bei dem biologisch abbaubaren Kunststoff um eines der oben genannten Materialien handeln.

Das Befestigungsband kann ein thermoplastisches Polymer, insbesondere ein biologisch abbaubares thermoplastisches Polymer, umfassen oder hieraus gebildet sein. Das (biologisch abbaubare) thermoplastische Polymer kann ein (biologisch abbaubares) thermoplastisches Elastomer (TPE), insbesondere ein (biologisch abbaubares) thermoplastisches Polyurethan (TPU) sein.

Das wenigstens eine Befestigungsband kann mehrlagig aufgebaut sein, wobei das Befestigungsband eine Lage aus einer Folie und eine Lage eines Vliesstoffs, insbesondere eines Meltblowns, umfasst oder hieraus besteht. So kann das Befestigungsband in Form eines Laminats aus einer TPU-Folie und einem TPU-Meltblown, TPU-Spunbond oder TPU Spun-blown ausgebildet sein. Dieser Aufbau ergibt eine gute Elastizität bei hoher Stabilität des Befestigungsbands. Außerdem kann ein solches Befestigungsband in vorteilhafter Weise mit dem Filtermaterialstück verschweißt werden.

Bei einem Befestigungsband in Form eines Laminats umfassend eine Folie und einen Vliesstoff kann die Folie, insbesondere in Form einer Gießfolie, direkt auf den Vliesstoff auflaminiert sein. Damit ist kein zusätzlicher Klebstoff erforderlich.

Das Befestigungsband kann zu einer Kordel gedreht oder verdrillt ausgebildet sein. Dies erhöht den Tragekomfort. Dabei ist es möglich, die Verdrillung durch eine thermische Fixierung (z. B. Ultraschallschweißung) daran zu hindern, sich wieder zurückzudrehen.

Die beschriebenen Atemschutzmasken können (genau) zwei Befestigungsbänder umfassen.

Ein oder mehrere Befestigungsbänder können derart ausgebildet sein, um den Hinterkopf eines Trägers (Nutzers) geführt zu werden. Alternativ können ein oder mehrere Befestigungsbänder derart ausgebildet sein, um ein Ohr eines Trägers (Nutzers) geführt zu werden.

Das wenigstens eine Befestigungsband kann als geschlossenes Band ausgeführt sein. Dies bedeutet, dass das entsprechende Befestigungsband kein loses oder offenes Ende aufweist. Dies kann beispielsweise dadurch erreicht werden, dass beide Enden eines Befestigungsbands mit dem Filterteil bzw. dem Filtermaterialstück verbunden sind. Alternativ kann beispielsweise das entsprechende Band als solches geschlossen ausgeführt sein; es kann also eine Ring- oder Schlaufenform aufweisen.

Gemäß einer Alternative kann die Atemschutzmaske wenigstens zwei, insbesondere vier Befestigungsbänder mit offenem bzw. losem Ende aufweisen. Dies bedeutet, dass jeweils (nur) ein Ende jedes Befestigungsbands an dem Filterteil bzw. einer Vliesstoffbahn befestigt ist. Die offenen/losen Enden von jeweils zwei Befestigungsbändern lassen sich verknoten.

Das wenigstens eine Befestigungsband kann sich über eine gesamte Länge des Filtermaterialstücks bzw. des Filterteils erstrecken. Dies erlaubt, das wenigstens eine Befestigungsband während der Fertigung mit dem luftdurchlässigen Material mitlaufen zu lassen und gemeinsam mit diesem (an den Enden des Filtermaterialstücks) zu schneiden.

Insbesondere können zwei Befestigungsbänder vorgesehen sein, die sich über eine gesamte Länge des Filtermaterialstücks bzw. Filterteils erstrecken. Vorzugsweise sind diese zwei Befestigungsbänder auf der gleichen Seite des luftdurchlässigen Materials bzw. Filtermaterialstücks und entlang zweier gegenüberliegender Kanten des Filtermaterialstücks angeordnet.

Das wenigstens eine Befestigungsband kann an seinen zwei Endbereichen mit dem luftdurchlässigen Material verbunden, insbesondere verschweißt sein.

Die zuvor beschriebenen Atemschutzmasken können einen biegbaren Nasensteg umfassen. Dies erlaubt eine Optimierung der Passform, insbesondere einen besseren Abschluss der Atemschutzmaske im Augen- und Nasenbereich, sowie einen verbesserten Halt.

In diesem Fall kann die Atemschutzmaske aus dem luftdurchlässigen Material, dem wenigstens einen Befestigungsband und dem Nasensteg bestehen.

Der Nasensteg kann parallel zur nicht verschweißten Kante angeordnet sein. Er kann außen auf der Atemschutzmaske oder in eine der beiden Vliesstoffbahnen eingebettet angeordnet sein.

Der Nasensteg kann einen einfachen oder einen doppelten Draht umfassen. Der einfache oder der doppelte Draht können in einen Streifen eines Kunststoffmaterials oder eines papierbasierten Materials eingebettet sein. Alternativ kann der Nasensteg auch aus einem Kunststoffmaterial ohne Drahteinlage bestehen. Das Kunststoffmaterial kann aus einem biologisch abbaubaren Kunststoff gebildet sein. Die Breite des Nasenstegs kann 1 bis 10 mm betragen.

Die Länge des Nasenstegs kann 2 cm bis 25 cm, insbesondere mehr als 4 cm und/oder weniger als 10 cm betragen. Der Nasensteg kann auch sich über die gesamte Länge einer Kante des Filtermaterialstücks erstrecken. Letzteres erlaubt eine vereinfachte Herstellung, da der Nasensteg gemeinsam mit Filtermaterialstück während der Herstellung geschnitten werden kann.

Der Nasensteg kann nicht-zerstörungsfrei lösbar oder zerstörungsfrei lösbar an dem Filtermaterialstück befestigt sein. Ein zerstörungsfreies Lösen erlaubt die Wiederverwendung des Nasenstegs für weitere Atemschutzmasken sowie eine einfache Trennung der Atemschutzmaske in unterschiedlich entsorgbare Bestandteile.

Der Nasensteg kann mit dem Filtermaterialstück verklebt oder verschweißt sein. Die Befestigung mittels Klebstoffs kann durch ein Hotmelt erfolgen. Der Nasensteg kann entlang seiner gesamten Länge kontinuierlich oder nur an einzelnen diskreten Punkten mit dem Filtermaterialstück verbunden sein.

Der Gewichtsanteil aller biologisch abbaubaren Materialien kann, bezogen auf das Gesamtgewicht der Atemschutzmaske, mindestens 60 %, insbesondere mindestens 70 %, insbesondere mindestens 80 %, insbesondere mindestens 90 %, insbesondere 100 % betragen.

Die zuvor beschriebenen Atemschutzmasken können als Halbmaske ausgebildet sein. Damit bedecken sie im Gebrauch Nase, Mund und Kinn des Trägers. Die zuvor beschriebenen Atemschutzmasken können als medizinische Gesichtsmasken gemäß der DIN EN 14683:2019+AC:2019 oder als filtrierende Halbmaske gemäß der DIN EN 149 ausgebildet sein.

Das luftdurchlässige Material der Atemschutzmaske kann gekreppt sein. Hierfür kann insbesondere das Micrex-Mikro-Krepp-Verfahren eingesetzt werden. Rein beispielhaft wird auf die WO 2007/079502 verwiesen. Die damit erzielte Erhöhung der Oberfläche führt nicht nur zu einer weicheren Anmutung; das Filtermaterialstück lässt sich auch besser der Gesichtsform anpassen und nimmt Feuchtigkeit besser auf.

Die Erfindung stellt auch eine Atemschutzmaske umfassend ein Filtermaterialstück aus einem luftdurchlässigen Material und wenigstens ein Befestigungsband bereit,
wobei das luftdurchlässige Material mindestens eine Lage eines Vliesstoffes und/oder eine Lage aus einem Faservlies umfasst und das luftdurchlässige Material gekreppt ist, und
wobei das wenigstens eine Befestigungsband zur Befestigung der Atemschutzmaske am Kopf ausgebildet ist.

Das gekreppte luftdurchlässige Material führt zu einer verbesserten Atemschutzmaske unabhängig von der Verwendung biologisch abbaubarer Kunststoffe. Für diese Atemschutzmaske sind die oben beschriebenen Charakteristika, Parameter und Eigenschaften auch ohne die biologisch abbaubaren Kunststoffe anwendbar.

Bei den zuvor beschriebenen Atemschutzmasken kann das Befestigungsband gekreppt sein. Auch hier kann insbesondere das Micrex-Mikro-Krepp-Verfahren eingesetzt werden. Im Falle des oben genannten kordelförmigen oder verdrillten Befestigungsbands kann das Befestigungsband vor und/oder nach dem Verdrehen bzw. Verdrillen gekreppt werden.

Ein gekrepptes Befestigungsband erlaubt eine vorteilhafte Flexibilität für die Anpassung an unterschiedliche Kopfdurchmesser.

Die Erfindung stellt weiterhin ein System (Kit-of-Parts) umfassend eine wie zuvor beschriebene Atemschutzmaske und eine Schutzhülle für die Atemschutzmaske bereit. Die Schutzhülle kann in Form einer Folie ausgebildet sein. Die Schutzhülle kann, muss aber nicht aus einem biologisch abbaubaren Kunststoff sein. Sie kann aus dem gleichen Kunststoff wie die luftdurchlässige Lage sein.

Die Schutzhülle kann als Verpackung beim Vertrieb (bspw. Verkauf oder Versand) dienen. Die Schutzhülle reduziert die Gefahr eines ungewollten vorzeitigen Abbaus bzw. Zersetzen der Atemschutzmaske.

Vorzugsweise wird die Atemschutzmaske unter keimarmen Bedingungen hergestellt und/oder während oder nach der Herstellung keimtötend behandelt. Letzteres kann beispielsweise in einer UV-Behandlung bestehen.

Weiterhin stellt die Erfindung ein Schutzkleidungsstück aus einem luftdurchlässigen Material bereit, wobei das luftdurchlässige Material mindestens eine Lage eines biologisch abbaubaren Vliesstoffes umfasst oder hieraus besteht.

Bei dem Schutzkleidungsstück kann es sich beispielsweise um eine Schutzhaube, einen Schutzüberzug für Schuhe, einen Schutzumhang oder einen Schutzoverall handeln.

Das luftdurchlässige Material des Schutzkleidungsstücks kann ebenfalls die oben beschriebenen Charakteristika, Parameter und Eigenschaften aufweisen.

Zudem betrifft die vorliegende Erfindung die Verwendung eines biologisch abbaubaren Kunststoffes, insbesondere der voranstehend beschriebenen biologisch abbaubaren Kunststoffe, beispielsweise in Form von Vliesstoffen für eine Atemschutzmaske oder ein Schutzkleidungsstück, insbesondere die Herstellung einer Atemschutzmaske oder eines Schutzkleidungsstücks. Hinsichtlich der hierfür verwendbaren biologisch abbaubaren Kunststoffe oder der möglichen Ausgestaltung der Vliesstoffe wird diesbezüglich auf die voranstehenden Ausführungen verwiesen.

Die vorliegende Erfindung wird anhand der nachfolgenden beispielhaften Ausführungen unter Bezugnahme auf die Figuren näher beleuchtet, ohne die Erfindung auf die speziellen dargestellten Ausführungen zu beschränken. Dabei zeigen
- Fig. 1: schematisch eine Atemschutzmaske,
- Fig. 2: eine schematische Querschnittsansicht des Aufbaus eines Filtermaterialstücks einer Atemschutzmaske,
- Fig. 3: eine schematische Draufsicht auf eine Atemschutzmaske.

Für die Bestimmung der oben und im Folgenden beschriebenen Parameter werden die folgenden Verfahren verwendet.

Die Luftdurchlässigkeit wird gemäß DIN EN ISO9237:1995-12 bestimmt. Insbesondere wird mit einem Differenzdruck von 200 Pa und einer Prüffläche von 20 cm² gearbeitet. Für die Bestimmung der Luftdurchlässigkeit wurde das Luftdurchlässigkeitsprüfgerät FX3300 der Texttest AG verwendet.

Das Flächengewicht wird gemäß DIN EN 29073-1: 1992-08 bestimmt. Für die Bestimmung der Dicke der Vliesstofflage wird das Verfahren gemäß Norm DIN EN ISO 9073-2: 1997-02 eingesetzt, wobei das Verfahren A verwendet wird. Für die Bestimmung der Dicke von Folien wird das Verfahren gemäß Norm DIN ISO 4593:2019-06, Prüfung von Kunststoff-Folien - Bestimmung der Dicke durch mechanische Abtastung, verwendet.

Die Bestimmung der Höchstzugkraft wird gemäß DIN EN29073-3: 1992-08 durchgeführt. Insbesondere wird eine Streifenbreite von 50 mm verwendet.

Die Penetration (NaCl-Durchlässigkeit) wird mittels einem TSI 8130 Testgeräts bestimmt. Insbesondere wird 0,3 µm Natriumchlorid bei 86 l/min verwendet.

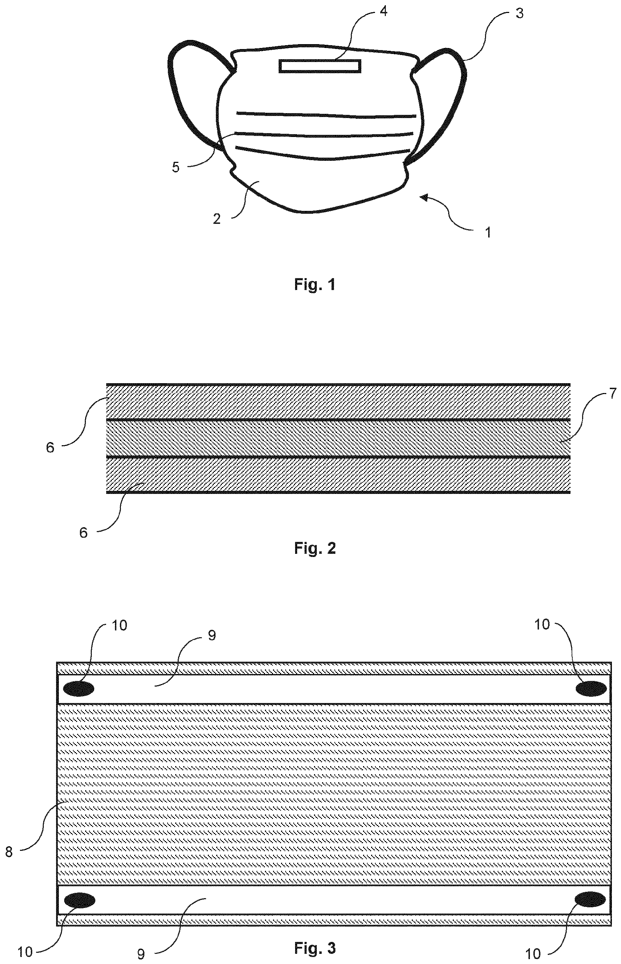

Figur 1 zeigt eine schematische Ansicht einer Atemschutzmaske 1 in Form einer Halbmaske. Es handelt sich hierbei um ein Beispiel einer medizinischen Gesichtsmaske. Die dargestellte Atemschutzmaske 1 umfasst ein Filtermaterialstück bzw. Filterteil 2. Der Zuschnitt des Filtermaterialstücks ist grundsätzlich rechteckig, kann aber auch andere insbesondere polygonale Formen annehmen.

An dem Filtermaterialstück 2 sind in dem gezeigten Beispiel zwei Befestigungsbänder 3 befestigt. Bei der Illustrierten Ausführungsform sind die Befestigungsbänder zur Befestigung an den Ohren des Trägers vorgesehen.

Zur besseren Anpassung an die Gesichtsform weist die Atemschutzmaske einen Nasensteg 4 auf, der nicht-zerstörungsfrei oder zerstörungsfrei lösbar mit dem Filtermaterialstück verbunden ist. Es kann sich insbesondere um einen in einem biologisch abbaubaren Kunststoffmaterial eingebetteten Draht handeln.

Eine nicht-zerstörungsfreie Verbindung besteht beispielsweise in einem Verschweißen. Dies kann entweder kontinuierlich über die gesamte Länge des Nasenstegs oder an einzelnen diskreten Punkten sein. Alternativ kann der Nasensteg mit dem Filtermaterialstück verklebt sein. Hierfür kann beispielsweise ein Hotmelt verwendet werden, was typischerweise ebenfalls zu einer nicht-zerstörungsfreien Verbindung führt.

Alternativ wird der Nasensteg als separates Element dem Nutzer zur Verfügung gestellt. In diesem Fall weist der Nasensteg eine selbstklebende Oberfläche auf, die anfänglich mit einem Schutzfilm abgedeckt ist. Nach Entfernung des Schutzfilms klebt der Benutzer den Nasensteg auf den Vliesstoff auf. Je nach eingesetztem Klebematerial lässt sich ein derartiger Nasensteg auch für andere Atemschutzfilterteile wiederverwenden.

In dem Ausführungsbeispiel sind in den Filterteil bzw. das luftdurchlässige Material 2 drei Falten 5 eingebracht.

In der schematischen Querschnittsansicht der Figur 2 ist der Aufbau eines Filtermaterialstücks für eine Atemschutzmaske illustriert. Zwischen zwei Stützlagen 6 ist eine Feinfilterlage 7 angeordnet. Die drei Lagen können insbesondere entlang der Kanten, also des Umfangs, des Filterteils 2, wie es in Figur 1 illustriert ist, miteinander verschweißt sein.

Alternativ zu dem in Figur 2 gezeigten Aufbau kann das luftdurchlässige Material der Atemschutzmaske auch weniger oder mehr Lagen umfassen. So können beispielsweise nur eine Stützlage und eine Feinfilterlage vorgesehen sein.

Als Stützlagen 6 kommen insbesondere Spunbond- oder Spun-Blown-Lagen aus PLA, PBAT (bspw. Ecoflex von BASF) einem anderen biologisch abbaubaren Polyester wie Duvaltex in Frage. Die Stützlagen weisen ein Flächengewicht von 5 bis 50 g/m² und einen Titer von 1 dtex bis 15 dtex auf. Als thermisches Bindeverfahren für die Verfestigung des Vliesstoffs ist insbesondere das HELIX® (Comerio Ercole) Verfahren vorteilhaft.

Als Feinfilterlagen 7 werden eine oder mehrere Lagen Meltblown aus PLA mit einem Flächengewicht von jeweils 5 bis 30 g/m² eingesetzt. Zumindest diese Lage(n) werden elektrostatisch aufgeladen.

Konkret kann das Filtermaterialstück aus einem dreilagigen luftdurchlässigen Material bestehen. Dabei ist zwischen zwei Spunbond- oder Spun-Blown-Vliesstofflagen mit einer Grammatur von 20 g/m² eine Meltblownvliesstofflage mit einer Grammatur von 20 g/m² angeordnet. Das so erhaltene SMS kann durch eine entlang der Kanten umlaufende Schweißnaht ultraschallverschweißt sein.

Das Meltblown kann durch Zusatz von Additiven und einer Wasserstrahlbehandlung (Hydrocharging), wie sie beispielsweise in der WO 97/07272 beschrieben ist, elektrostatisch geladen werden.

Alternativ kann das Meltblown eine Grammatur von 25 g/m² aufweisen und mittels einer Corona-Behandlung elektrostatisch geladen worden sein.

Das SMS kann gekreppt sein. Hierfür kann insbesondere das Micrex-Mikro-Krepp-Verfahren eingesetzt werden. Rein beispielhaft wird auf die WO 2007/079502 verwiesen. Die damit erzielt Erhöhung der Oberfläche führt nicht nur zu einer weicheren Anmutung, es lässt sich auch besser der Gesichtsform anpassen und nimmt Feuchtigkeit besser auf.

Figur 3 zeigt eine schematische Draufsicht eines luftdurchlässigen Materials 8, das dem Filterteil 2 der Figur 1 entspricht. Im Vergleich mit der Figur 1 zeigt Figur 3 jedoch die Rückseite des Filterteils, also die einem Benutzer zugewandte Seite.

In dem illustrierten Beispiel sind an gegenüberliegenden Kanten des luftdurchlässigen Materials 8 jeweils ein Befestigungsband 9 angeordnet, dass sich über die gesamte Kantenlänge erstreckt. Die Befestigungsbänder können somit bei der Fertigung des Filterteils mit dem luftdurchlässigen Material mitlaufen und gemeinsam mit diesem geschnitten werden. Die Verbindung von Befestigungsband und luftdurchlässigem Material erfolgt in dem gezeigten Beispiel über jeweils einen Schweißpunkt 10 an den einander gegenüberliegenden Endbereichen jedes Befestigungsbands 9.

Für das Befestigungsband wird beispielsweise ein TPU-Laminat aus einer TPU-Folie mit einer Dicke von 20 µm bis 100 µm und einem TPU-Meltblown (Grammatur: 20 bis 80 g/m²) verwendet, das mit dem Filtermaterialstück verschweißt ist. Das biologisch abbaubare TPU lässt sich beispielsweise gemäß Z. Wang et al., "Fabrication and Properties of a Bio-Based Biodegradable Thermoplastic Polyurethane Elastomer", Polymers 2019, 11, 1121 erhalten.

Für das Verschweißen lässt sich für die Erzielung einer hohen Festigkeit das in der europäischen Patentanmeldung EP 18213001.3 in einem anderen technischen Gebiet offenbarte Verfahren einsetzen.

## Patentansprüche

1. Atemschutzmaske umfassend ein Filtermaterialstück aus einem luftdurchlässigen Material und wenigstens ein Befestigungsband,
wobei das luftdurchlässige Material mindestens eine Lage eines biologisch abbaubaren Vliesstoffes umfasst,
wobei das wenigstens eine Befestigungsband zur Befestigung der Atemschutzmaske am Kopf ausgebildet ist.

2. Atemschutzmaske nach Anspruch 1, wobei die wenigstens eine biologisch abbaubare Vliesstofflage einen biologisch abbaubaren Kunststoff, insbesondere ein Polylactid (PLA), ein Polyhydroxyalkanoat (PHA), ein Polycaprolacton (PCL), einen Celluloseester, insbesondere Celluloseacetat, Polybutylenadipat-terephthalat (PBAT) oder Polybutylensuccinat (PBS), umfasst.

3. Atemschutzmaske nach einem der vorangegangenen Ansprüche, wobei der biologisch abbaubare Vliesstoff ein trocken- oder nassgelegter Vliesstoff oder ein Extrusionsvliesstoff ist.

4. Atemschutzmaske nach einem der vorhergehenden Ansprüche, wobei das luftdurchlässige Material mehrlagig aufgebaut ist, wobei mindestens eine, mehrere oder sämtliche der Lagen einen biologisch abbaubaren Vliesstoff umfassen oder hieraus gebildet sind.

5. Atemschutzmaske nach einem der vorhergehenden Ansprüche, wobei das luftdurchlässige Material mindestens eine Stützlage und mindestens eine Feinfilterlage umfasst,
wobei mindestens eine, mehrere oder sämtliche der Stützlagen und/oder mindestens eine, mehrere oder sämtliche der Feinfilterlagen biologisch abbaubare Vliesstoffe sind.

6. Atemschutzmaske nach einem der vorangegangenen Ansprüche, wobei der biologisch abbaubare Vliesstoff ein Flächengewicht von 20 g/m² bis 200 g/m², insbesondere 40 g/m² bis 150 g/m², insbesondere 80 g/m², aufweist.

7. Atemschutzmaske nach einem der vorangegangenen Ansprüche, wobei der biologisch abbaubare Vliesstoff elektrostatisch aufgeladen ist.

8. Atemschutzmaske nach einem der vorangegangenen Ansprüche, wobei das luftdurchlässige Material mindestens eine Stützlage und mindestens eine Feinfilterlage umfasst, wobei die mindestens eine Stützlage und/oder die mindestens eine Feinfilterlage eine biologisch abbaubare Vliesstofflage sind.

9. Atemschutzmaske nach einem der vorhergehenden Ansprüche, wobei das luftdurchlässige Material mehrlagig ausgebildet ist mit einer Lagenfolge:
eine Stützlage, eine oder zwei Feinfilterlagen sowie eine weitere Stützlage,
insbesondere wobei die Stützlagen und/oder die ein oder zwei Feinfilterlagen jeweils eine biologisch abbaubare Vliesstofflage sind.

10. Atemschutzmaske nach einem der vorhergehenden Ansprüche, wobei das wenigstens eine Befestigungsband einen biologisch abbaubaren Kunststoff umfasst oder aus einem oder mehreren biologisch abbaubaren Kunststoffen gebildet ist.

11. Atemschutzmaske nach Anspruch 10, wobei das wenigstens eine Befestigungsband mehrlagig aufgebaut ist, wobei das Befestigungsband eine Lage aus einer Folie und eine Lage eines Vliesstoffs umfasst oder hieraus besteht

12. Atemschutzmaske nach einem der vorhergehenden Ansprüche, wobei das Befestigungsband ein thermoplastisches Polymer, insbesondere ein biologisch abbaubares thermoplastisches Polymer, umfasst oder hieraus gebildet ist.

13. Atemschutzmaske nach einem der vorhergehenden Ansprüche, wobei der Gewichtsanteil aller biologisch abbaubarer Materialien, bezogen auf das Gesamtgewicht der Atemschutzmaske mindestens 60 %, insbesondere mindestens 70 %, insbesondere mindestens 80 %, insbesondere mindestens 90 %, insbesondere 100 % beträgt.

14. Atemschutzmaske nach einem der vorangegangenen Ansprüche, wobei die Atemschutzmaske als Halbmaske, insbesondere als medizinische Gesichtsmaske gemäß der DIN EN 14683:2019+AC:2019 oder als filtrierende Halbmaske gemäß der DIN EN 149 ausgebildet ist.

15. Verwendung eines biologisch abbaubaren Kunststoffs, insbesondere in Form eines Vliesstoffes und/oder eines Faservlieses für eine Atemschutzmaske.
